# EUROPEAN PATENT APPLICATION

(11) **EP 4 390 646 A1**
(43) Date of publication of application: **26.06.2024**
(21) Application number: 22868725.7
(22) Date of filing: 30.05.2022
(51) Int. Cl.: G06F 3/06

(54) **DATA PROCESSING METHOD IN DISTRIBUTED SYSTEM, AND RELATED SYSTEM**

(30) Priority: 14.09.2021 CN 202111076633
(71) Applicant: Huawei Technologies Co., Ltd., Shenzhen, Guangdong 518129 (CN)
(72) Inventor: XU, Hua, Shenzhen, Guangdong 518129 (CN); BAO, Xiaoming, Shenzhen, Guangdong 518129 (CN); LIU, Chun, Shenzhen, Guangdong 518129 (CN); ZHOU, Minjun, Shenzhen, Guangdong 518129 (CN); CHEN, Jiahuai, Shenzhen, Guangdong 518129 (CN)
(74) Representative: Epping - Hermann - Fischer
(86) International application number: PCT/CN2022/095934
(87) International publication number: WO 2023/040348

(57) **Abstract**

This application provides a data processing method in a distributed system. The method includes: A management node splits a to-be-processed data processing request into a map task and a reduce task. A first worker node executes the map task, and writes intermediate data obtained by executing the map task into a shared storage area. The intermediate data is divided into a plurality of partitions based on a quantity of second worker nodes. Each partition belongs to one second worker node. An aggregation node stores, in a centralized manner, intermediate data that belongs to a same partition in the shared storage area. The second worker node obtains intermediate data of a corresponding partition to execute the reduce task. In this way, efficiency of pulling the intermediate data is improved, a transmission size is increased, a quantity of transmission times is reduced, and network performance is fully utilized.

## Description

This application claims priority to Chinese Patent Application No. 202111076633.7, filed with the China National Intellectual Property Administration on September 14, 2021 and entitled "DATA PROCESSING METHOD IN DISTRIBUTED SYSTEM, AND RELATED SYSTEM", which is incorporated herein by reference in its entirety.

### TECHNICAL FIELD

This application relates to the field of big data technologies, and in particular, to a data processing method in a distributed system, a distributed system, a computer cluster, a computer-readable storage medium, and a computer program product.

### BACKGROUND

With the popularity of intelligent terminals such as smartphones and tablets and the continuous development of the Internet, data is growing explosively. For example, a large quantity of users perform online social networking, online shopping, and online entertainment by using the smartphones, and massive data is generated. In another example, a production device generates massive data during product production.

Big data processing plays an important role in a scenario such as massive data analysis and retrieval. As a requirement for a processing delay increases, most data processing systems use a distributed system to accelerate a data processing process. Specifically, the distributed system may implement distributed processing by using a MapReduce MapReduce model.

Specifically, the distributed system includes a master (master) node and a plurality of worker (worker) nodes. When a job is submitted to the distributed system, the master node in the distributed system splits the job into a plurality of map tasks and a plurality of reduce tasks. The master node schedules the plurality of map tasks and the plurality of reduce tasks to the plurality of worker nodes. Each worker node to which a map task is allocated may process some data of input data in parallel, to obtain intermediate data. The intermediate data may include data belonging to different partitions (partitions). Each reduce task may be used to process data in a specified partition. Based on this, a worker node to which a reduce task is allocated may obtain data in a partition required by the reduce task in the intermediate data, and perform processing to obtain a processing result.

However, as a requirement of a big data application on data processing efficiency increases, a concurrency granularity of the MapReduce model is increasingly larger, and there are more and more data partitions. Correspondingly, a quantity of reduce tasks also increases, and an amount of data pulled by a single reduce task from a single data file is increasingly smaller. As a result, when the reduce task pulls data, read/write efficiency of a hard disk is relatively low, a size of a request packet in a data transmission process becomes increasingly smaller, and network performance cannot be fully utilized. In addition, an excessive quantity of requests may also cause network congestion and a packet loss, and cause a fault retry of the reduce task, affecting processing performance of the entire big data application.

### SUMMARY

This application provides a data processing method in a distributed system. According to the method, intermediate data generated during execution of a map task is written into a shared storage area, and intermediate data that belongs to a same partition in the shared storage area is stored in a centralized manner, so that a worker node that executes a reduce task can pull intermediate data in a corresponding partition. In this way, data pulling efficiency is improved, a quantity of transmission times is reduced by increasing a transmission size, and network performance is fully utilized, so that network congestion and a packet loss due to an excessive quantity of requests are avoided, thereby avoiding a reduce task retry, and ensuring processing performance of a big data application. This application further provides a distributed system, a computer cluster, a computer-readable storage medium, and a computer program product corresponding to the foregoing method. According to a first aspect, this application provides a data processing method in a distributed system. The distributed system includes a management node, a plurality of worker nodes, and an aggregation node. The management node, the worker node, and the aggregation node may be physical nodes, for example, a server, or may be logical nodes, for example, a virtual machine or a container in a server.

To be specific, the management node splits a to-be-processed data processing request into a map task and a reduce task; a first worker node in the plurality of worker nodes executes the map task, and writes intermediate data obtained by executing the map task into a shared storage area, where the intermediate data is divided into a plurality of partitions based on a quantity of second worker nodes, and each partition belongs to one second worker node; the aggregation node stores, in a centralized manner, intermediate data that belongs to a same partition in the shared storage area; and the second worker node obtains intermediate data of a corresponding partition to execute the reduce task.

In the method, the first worker node writes, into the shared storage area, the intermediate data generated when the map task is executed, and then the aggregation node stores, in a centralized manner, the intermediate data that is written into the shared storage area and that belongs to a same partition, so that the second worker node can pull intermediate data in a corresponding partition to perform the reduce task, thereby improving data pulling efficiency. In addition, in this method, intermediate data in a corresponding partition is transmitted, so that a quantity of transmission times can be reduced, and a transmission size can be increased. Therefore, network performance can be fully utilized, network congestion and a packet loss caused by an excessive quantity of requests can be avoided, thereby avoiding a fault retry of the reduce task, and ensuring processing performance of a big data application.

In some possible implementations, the aggregation node may manage the shared storage area. For example, the aggregation node may allocate a buffer area to the first worker node from the shared storage area. To be Specific, the first worker node applies to the aggregation node for a buffer area in the shared storage area, and then the first worker node may write the intermediate data into the buffer area. When writing cannot be performed on the buffer area, for example, when the buffer area is full, the first worker node sends an aggregation task to the aggregation node, and the aggregation node executes the aggregation task, to store, in a centralized manner, the intermediate data that belongs to the same partition in the shared storage area.

In the method, each first worker node writes intermediate data into a buffer area corresponding to the first worker node, and the aggregation node stores, in a centralized manner, intermediate data that belongs to a same partition and that is in a buffer area on which writing cannot be performed. In this case, there is no need to wait for all intermediate data to be written into the shared storage area. In this way, centralized data storage efficiency can be improved, and a worker node that executes the reduce task does not need to wait for all the intermediate data to be stored in a centralized manner, thereby shortening a time period for pulling the intermediate data, and improving efficiency of pulling the intermediate data.

In some possible implementations, data in each partition of the intermediate data has a partition identifier. Correspondingly, the aggregation node may store, in a centralized manner, data that is in the intermediate data and that has a same partition identifier based on the partition identifier.

In the method, the aggregation node may quickly determine, based on the partition identifier, data belonging to a same partition, and then store the data belonging to the same partition in a centralized manner, thereby improving centralized storage efficiency and meeting a service requirement.

In some possible implementations, the buffer area includes a data area and an index area, the data area is used to store the intermediate data, the index area is used to store an amount of data that is of each partition of the intermediate data and that is written into the data area, and the data area is divided into a plurality of sub-areas based on different hash values.

Based on this, the first worker node may determine a hash value based on a partition identifier of data in each partition of the intermediate data; determine, based on the hash value, a sub-area into which the intermediate data is written; write the intermediate data into the sub-area; and write, into the index area, the amount of data that is of each partition of the intermediate data and that is written into the data area.

In the method, the data area is divided into a plurality of sub-areas, so that a concurrency granularity of writing the intermediate data can be increased, and efficiency of writing the intermediate data can be improved. In addition, in the method, the intermediate data is written into a corresponding sub-area based on the hash value, and when the intermediate data in the same partition is subsequently stored, the intermediate data may be quickly located in a hash search manner.

In some possible implementations, at least one sub-area is used to store intermediate data belonging to two partitions, where intermediate data belonging to a first partition is written into the sub-area in ascending order of addresses of the buffer area, and intermediate data belonging to a second partition is written into the sub-area in descending order of the addresses of the buffer area. That is, the first worker node may additionally write the intermediate data of the two partitions into the sub-area in a bidirectional write manner, thereby improving space utilization and meeting a service requirement.

In some possible implementations, the buffer area includes a data area and an index area, the data area is used to store the intermediate data and a length of the intermediate data, and the index area is used to store a partition identifier of a partition to which each piece of data in the intermediate data belongs and an offset of each piece of data in the data area.

In the method, a data area is not partitioned. Therefore, data in the plurality of partitions may share storage space of the data area, thereby improving space utilization and meeting a service requirement.

In some possible implementations, the intermediate data and the length of the intermediate data are written into the data area in ascending order of addresses of the buffer area, and the partition identifier and the offset are written into the index area in descending order of the addresses of the buffer area; or the intermediate data and the length of the intermediate data are written into the data area in descending order of addresses of the buffer area, and the partition identifier and the offset are written into the index area in ascending order of the addresses of the buffer area.

In the method, the intermediate data, the length of the intermediate data, and the partition identifier and the offset of the partition to which each piece of data in the intermediate data belongs may share storage space of the entire buffer area. In this way, a waste of storage space of the buffer area can be reduced, and resource utilization of the buffer area can be improved.

According to a second aspect, this application provides a distributed system. The distributed system includes a management node, a plurality of worker nodes, and an aggregation node.

The management node is configured to split a to-be-processed data processing request into a map task and a reduce task.

A first worker node in the plurality of worker nodes is configured to execute the map task, and write intermediate data obtained by executing the map task into a shared storage area, where the intermediate data is divided into a plurality of partitions based on a quantity of second worker nodes, and each partition belongs to one second worker node.

The aggregation node is configured to store, in a centralized manner, intermediate data that belongs to a same partition in the shared storage area.

The second worker node is configured to obtain intermediate data of a corresponding partition to execute the reduce task.

In some possible implementations, the first worker node is specifically configured to:
apply to the aggregation node for a buffer area in the shared storage area; and
write the intermediate data into the buffer area.

The first worker node is further configured to:
send an aggregation task to the aggregation node when writing cannot be performed on the buffer area.

The aggregation node is specifically configured to:
execute the aggregation task, to store, in a centralized manner, the intermediate data that belongs to the same partition in the shared storage area.

In some possible implementations, data in each partition of the intermediate data has a partition identifier; and the aggregation node is specifically configured to:
store, in a centralized manner, data that is in the intermediate data and that has a same partition identifier based on the partition identifier.

In some possible implementations, the buffer area includes a data area and an index area, the data area is used to store the intermediate data, the index area is used to store an amount of data that is of each partition of the intermediate data and that is written into the data area, and the data area is divided into a plurality of sub-areas based on different hash values.

The first worker node is specifically configured to:
determine a hash value based on a partition identifier of data in each partition of the intermediate data;
determine, based on the hash value, a sub-area into which the intermediate data is written;
write the intermediate data into the sub-area; and
write, into the index area, the amount of data that is of each partition of the intermediate data and that is written into the data area.

In some possible implementations, at least one sub-area is used to store intermediate data belonging to two partitions, where intermediate data belonging to a first partition is written into the sub-area in ascending order of addresses of the buffer area, and intermediate data belonging to a second partition is written into the sub-area in descending order of the addresses of the buffer area.

In some possible implementations, the buffer area includes a data area and an index area, the data area is used to store the intermediate data and a length of the intermediate data, and the index area is used to store a partition identifier of a partition to which each piece of data in the intermediate data belongs and an offset of each piece of data in the data area.

In some possible implementations, the intermediate data and the length of the intermediate data are written into the data area in ascending order of addresses of the buffer area, and the partition identifier and the offset are written into the index area in descending order of the addresses of the buffer area; or the intermediate data and the length of the intermediate data are written into the data area in descending order of addresses of the buffer area, and the partition identifier and the offset are written into the index area in ascending order of the addresses of the buffer area.

According to a third aspect, this application provides a computer cluster, where the computer cluster includes at least one computer. The at least one computer includes at least one processor and at least one memory. The at least one processor and the at least one memory communicate with each other. The at least one memory stores computer-readable instructions, and the at least one processor reads and executes the computer-readable instructions, so that the computer cluster performs the data processing method in a distributed system according to the first aspect or any implementation of the first aspect.

According to a fourth aspect, this application provides a computer-readable storage medium, where the computer-readable storage medium stores instructions, and the instructions indicate a computer or a computer cluster to perform the data processing method in a distributed system according to the first aspect or any implementation of the first aspect.

According to a fifth aspect, this application provides a computer program product including instructions. When the computer program product runs on a computer or a computer cluster, the computer or the computer cluster is enabled to perform the data processing method in a distributed system according to the first aspect or any implementation of the first aspect.

Based on the implementations provided in the foregoing aspects, this application may be further combined to provide more implementations.

### BRIEF DESCRIPTION OF DRAWINGS

To describe the technical methods in embodiments of this application more clearly, the following briefly describes the accompanying drawings used in describing the embodiments.
FIG. 1 is a schematic diagram of a working procedure of a MapReduce model according to an embodiment of this application;
FIG. 2 is an architectural diagram of a distributed system according to an embodiment of this application;
FIG. 3 is a flowchart of a data processing method in a distributed system according to an embodiment of this application;
FIG. 4 is a schematic diagram of a data write mechanism according to an embodiment of this application;
FIG. 5 is a schematic diagram of another data write mechanism according to an embodiment of this application;
FIG. 6 is a schematic flowchart of data aggregation according to an embodiment of this application; and
FIG. 7 is a schematic diagram of a structure of an aggregation node according to an embodiment of this application; and
FIG. 8 is a schematic diagram of a structure of a computer cluster according to an embodiment of this application.

### DESCRIPTION OF EMBODIMENTS

The terms "first" and "second" in embodiments of this application are merely for the purpose of description, and shall not be construed as an indication or implication of relative importance or an implicit indication of a quantity of indicated technical features. Therefore, a feature limited by "first" or "second" may explicitly or implicitly include one or more of the features.

For ease of understanding of embodiments of this application, some terms in this application are first explained and described.

Big data is also referred to as massive data, and is a large amount of unstructured or structured data from various sources. For example, the big data may be transaction data from an e-commerce application, social data from a social application, or browsing behavior data from a news reading application.

Distributed processing (distributed processing) is a manner in which a plurality of computers with different functions or data or computers at different places are connected through a communication network, and large-scale information processing tasks are coordinately completed under unified management and control of a control system. The distributed processing manner may be used to process big data, for example, analyze and retrieve the big data, to accelerate data processing.

A MapReduce (MapReduce) model is a classic data processing model in distributed big data processing. This model is used to process a large-scale dataset, for example, a dataset greater than 1 terabyte (terabyte, TB). This model specifies a map function and a reduce function. The map function is used to process a key-value (key-value, KV) pair, and send a number of key-value pairs. The reduce function is used to process values of a same key group to obtain a new key-value pair. For example, an input of the map function may be <k1, v1>, and an output of the map function may be a plurality of pairs of <k2, v2>. The plurality of pairs of <k2, v2> may be combined based on a key to obtain <k2, set (v2)>. An input of the reduce function may be <k2, a set (v2)>, and an output of the reduce function may be <k3, v3>.

For ease of understanding, the following uses a web page word count (word count) scenario as an example to describe the map function and the reduce function. Because a quantity of web pages is relatively large, it is usually difficult to read all web pages into a memory by using a program to perform word counting. In view of this, a map function and a reduce function are set to perform distributed word counting. Specifically, an input of the map function is a <key, value> pair, where the value may be a row of data in all texts to be counted. A calculation process of the map function is to extract all words in the row of text and output a new key-value pair <word, 1> for each word. The new key-value pair may be combined based on the words, to form a key-value set pair, for example, <word, <1,1,1...>>. An input of the reduce function is the foregoing key-value set pair, for example, <word, <1,1,1...>>. A calculation process of the reduce function is to sum up 1 in the set, and then use a key and a summation result to generate a new key-value pair for output. An output of the reduce function may be represented as <word, sum>, where the sum is the summation result.

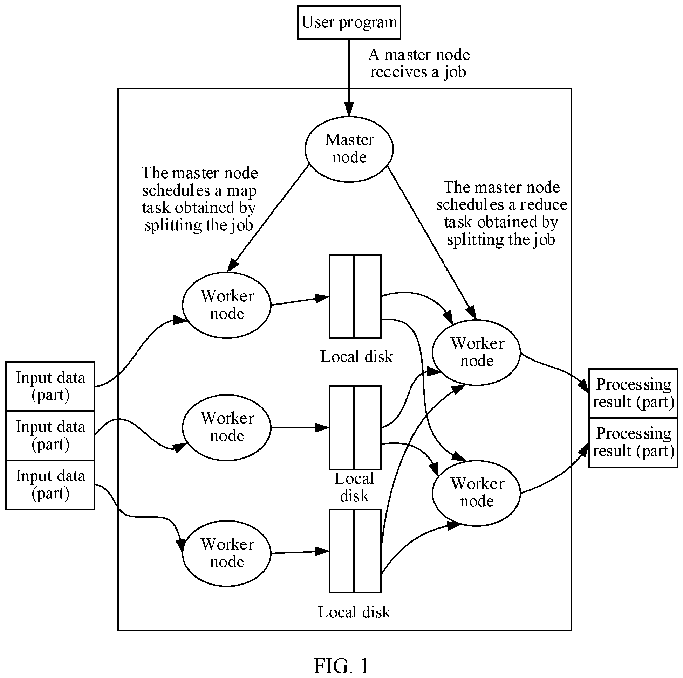

The MapReduce model may be deployed in a distributed system to accelerate data processing. The distributed system includes a management node and a plurality of worker nodes. The management node may also be referred to as a master node. The master node is responsible for allocating a task and coordinating task execution. The worker node is responsible for executing the task. FIG. 1 is a schematic diagram of a working procedure of a MapReduce model. A user program (user program) delivers a job to the master node, and the master node splits the job into M map tasks and N reduce tasks, where M and N are positive integers. In an example in FIG. 1, M is equal to 3, and N is equal to 2. Then, the master node schedules the M map tasks and the N reduce tasks to corresponding worker nodes. A worker node to which a map task is allocated reads input data, extracts a key-value pair from the input data, and transfers the key-value pair to the map function as parameters. An output result (which is also referred to as intermediate data) of the map function is stored on a local disk. A worker node to which a reduce task is allocated reads the intermediate data, and reduces or simplifies the intermediate data to obtain a processing result. Further, the worker node to which the reduce task is allocated may further write the processing result into a file system, to output the processing result in a form of a file.

In FIG. 1, the MapReduce model divides data processing into a map phase, a shuffle phase, and a reduce phase. The map phase is used to process the input data to obtain intermediate data. The reduce phase is used to process the intermediate data and obtain a processing result. The shuffle phase is mainly used for data migration. For example, the intermediate data is pulled from a local disk of a worker node that executes the map task to a worker node that executes the reduce task. The intermediate data may include a plurality of pieces of data, and each piece of data may be allocated to different partitions based on a preset partitioning rule. In other words, intermediate data generated by executing each map task may include data belonging to different partitions. Based on this, the worker node that executes the map task usually writes, based on a partition id (partition id), intermediate data generated by executing the map task into a corresponding partition in a data file corresponding to the map task, and records an amount of data and a start offset of each partition in an index file. Each reduce task is usually used to process data in a specified partition. Based on this, in the shuffle phase, the worker node that executes the reduce task may read the data in the specified partition from data file corresponding to each map task based on an amount of data and a start offset that are of a specified partition and that are recorded in the index file.

However, as a requirement of a big data application on data processing efficiency increases, a concurrency granularity of the MapReduce model is increasingly larger, and there are more and more data partitions. Correspondingly, a quantity of reduce tasks also increases, and an amount of data pulled by a single reduce task from a single data file is increasingly smaller. As a result, when the reduce task pulls data, read/write efficiency of a hard disk is relatively low. Moreover, a size of a request packet in a data transmission process becomes increasingly smaller, and network performance cannot be fully utilized. In addition, an excessive quantity of requests may also cause network congestion and a packet loss, and cause a fault retry of the reduce task, affecting processing performance of the entire big data application.

In view of this, embodiments of this application provide a data processing method in a distributed system. In the method, intermediate data generated when the plurality of worker nodes execute the map tasks is written into the shared storage area, and then intermediate data that belongs to a same partition and that is in the shared storage area is stored in a centralized manner, so that the worker node that executes the reduce task can pull intermediate data in a corresponding partition, thereby improving data pulling efficiency. In addition, in this method, intermediate data in a corresponding partition is transmitted, so that a quantity of transmission times can be reduced, and a transmission size can be increased. Therefore, network performance can be fully utilized, network congestion and a packet loss caused by an excessive quantity of requests can be avoided, thereby avoiding a fault retry of the reduce task, and ensuring processing performance of a big data application.

To make the technical solutions of this application clearer and easier to understand, a system architecture of instances of this application is described in detail below with reference to the accompanying drawings.

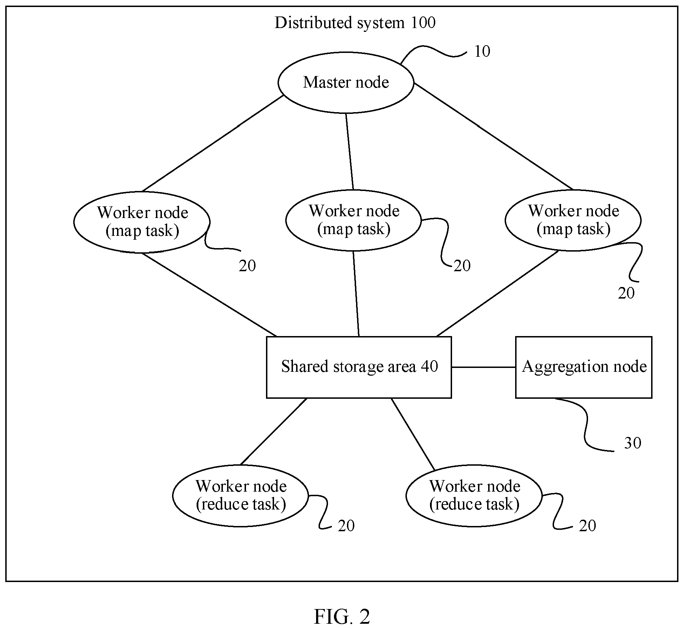

Refer to an architectural diagram of a distributed system shown in FIG. 2. As shown in FIG. 2, the distributed system 100 includes a master node 10, a plurality of worker nodes 20, and an aggregation node 30. The master node 10, the worker node 20, and the aggregation node 30 may be physical nodes, for example, servers or terminals. The server may be a server (that is, a cloud server) in a cloud environment, or a server (that is, an edge server) in an edge environment, or may be a server (that is, a local server) in a local data center. The terminal includes but is not limited to a desktop computer, a notebook computer, a smartphone, an intelligent wearable device (such as a smart band or a smart watch), and the like. In some embodiments, the master node 10, the worker nodes 20, and the aggregation node 30 may also be logical nodes, for example, virtual machines (virtual machines) and containers (containers) on a same physical node or different physical nodes. The master node 10 separately establishes communication connections to the plurality of worker nodes 20. For example, the master node 10 may establish communication connections to the plurality of worker nodes 20 in a wired communication manner such as an optical fiber. In another example, the master node 10 may establish communication connections to the plurality of worker nodes 20 in a wireless communication manner such as a wireless local area network (wireless local area network, WLAN), a fifth generation (fifth generation, 5G) mobile communication network, Bluetooth, or zigbee (zigbee).

The master node 10 is configured to allocate a task and coordinate execution of the task. The worker node 20 is configured to execute the task. The aggregation node 30 is configured to aggregate intermediate data generated when some worker nodes 20 execute tasks, to provide aggregated intermediate data to some other worker nodes 20 for further processing.

To be specific, the master node 10 receives a data processing request, for example, receives a data processing request triggered by a big data application. The data processing request may also be referred to as a data processing job (which may be referred to as a job for short). The master node 10 splits the data processing request to be processed into a map task and a reduce task. For example, the master node 10 may split the data processing request into M map tasks and N reduce tasks. M and N are positive integers. Considering the concurrency granularity, M and N may be positive integers greater than 1.

Then, the master node 10 may schedule the map tasks to some worker nodes 20 in the plurality of worker nodes 20, and schedule the reduce tasks to some other worker nodes 20 in the plurality of worker nodes 20. For ease of differentiation, in this embodiment of this application, a worker node 20 to which a map task is scheduled is referred to as a first worker node, and a worker node 20 to which a reduce task is scheduled is referred to as a second worker node. Each worker node 20 may execute one task. Based on this, there may be M first worker nodes, and there may be N second worker nodes. In this embodiment, it is assumed that M is equal to 3, and N is equal to 2.

It is to be noted that, the first worker node and the second worker node may overlap. In other words, in the plurality of worker nodes 20, both a map task and a reduce task may be allocated to some worker nodes 20. This is not limited in this embodiment.

The first worker node obtains to-be-processed data (for example, input data), executes the map task, and obtains intermediate data obtained by processing the to-be-processed data. Each worker node 20 in the first worker nodes obtains partial data of to-be-processed data. For example, if the to-be-processed data is 1 TB, the M worker nodes 20 separately obtain 1/M of the to-be-processed data. Each worker node 20 in the first worker node executes a map task, to process to-be-processed data obtained by the worker node 20, to generate intermediate data. The intermediate data is temporary data. The intermediate data may be divided into a plurality of partitions. In some embodiments, the intermediate data may be divided into a plurality of partitions based on a quantity of reduce tasks, and each partition belongs to one second worker node.

The first worker node may write the intermediate data into a shared storage area 40. The shared storage area 40 is a storage area that can be shared by the worker nodes 20, and each worker node 20 can access the shared storage area 40 to read and write data. The shared storage area 40 may be a global storage pool formed by providing a part of memories by each worker node 20. The global storage pool formed based on the memory may also be referred to as a global memory pool or a shared memory. It is to be noted that, a storage medium used to form the global storage pool may also be a hard disk drive (hard disk drive, HDD), a solid state drive (solid state drive), or the like. The storage medium may be a local storage medium, for example, a local hard disk drive, or may be a remote hard disk drive, for example, a network attached storage (network attached storage, NAS).

The aggregation node 30 may store, in a centralized manner, intermediate data that belongs to a same partition in the shared storage area 40. For example, the aggregation node 30 may configure a storage area of each partition in the shared storage area. Then, the aggregation node 30 may copy intermediate data belonging to a first partition to a storage area of the first partition, copy intermediate data belonging to a second partition to a storage area of the second partition, and by analogy, copy intermediate data belonging to an N^{th} partition to a storage area of an N^{th} partition, so that intermediate data belonging to a same partition is stored in a centralized manner, that is, the intermediate data is aggregated. Data in each partition of the intermediate data has a partition id (partition id). The aggregation node 30 may store, in a centralized manner, data that is in the intermediate data and that has a same partition identifier based on the partition identifier.

The second worker node may obtain intermediate data of a corresponding partition, to execute the reduce task and obtain a processing result. To be specific, each worker node 20 in the second worker node may obtain intermediate data of a corresponding partition based on a partition identifier corresponding to the worker node 20, to execute the reduce task and obtain a processing result. It is to be noted that, there are a plurality of second worker nodes, each second worker node may obtain a part of the processing result, and each worker node 20 may write the part of the processing result into a storage system, for example, a file written into the storage system. In this way, the big data application may read the file to obtain the processing result.

In the embodiment shown in FIG. 2, the shared storage area 40 may also be formed by a storage medium such as a memory, a hard disk drive, and the like of the aggregation node 30. For example, the aggregation node 30 may provide a part of memories to form a shared memory, so that the plurality of worker nodes 20 can read and write data.

FIG. 2 describes in detail an architecture of a distributed system 100 according to an embodiment of this application. The data processing method provided in embodiments of this application is described in detail below with reference to the accompanying drawings from a perspective of the distributed system 100.

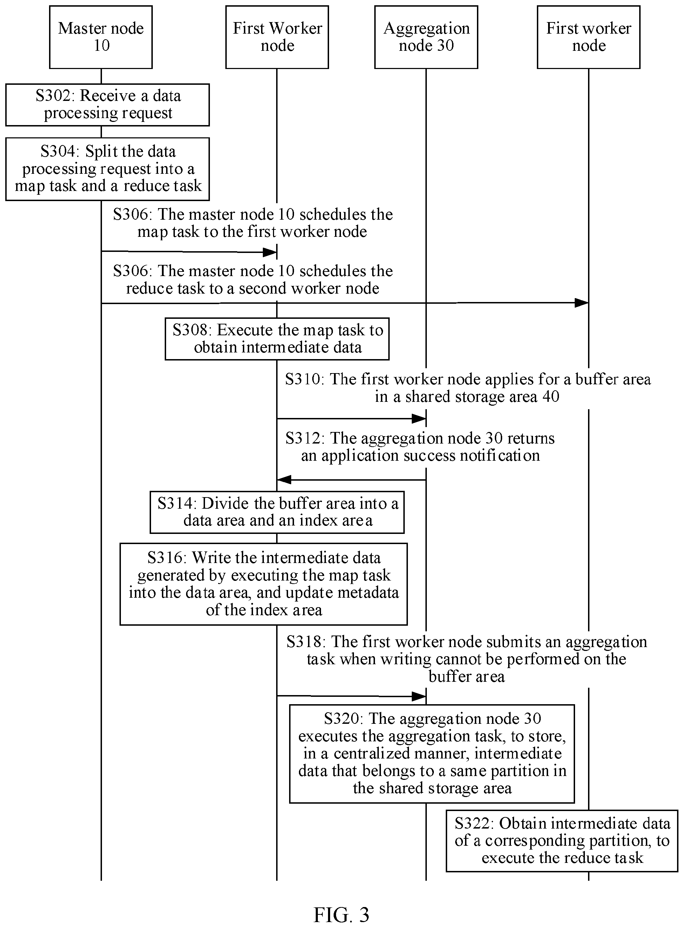

Refer to a flowchart of a data processing method shown in FIG. 3. The method includes the following steps.

S302: A master node 10 receives a data processing request.

To be specific, a user may trigger a data processing request through a big data application, and the master node 10 receives the data processing request sent by the big data application. The data processing request is used to process a large-scale dataset. The large-scale dataset is a dataset whose amount of data is greater than a preset value.

In some embodiments, the large-scale dataset may include a set of web pages in the Internet, a set of commodity comments in an e-commerce application, or a set of original content published by a user in a social application. Based on this, the data processing request may be a web page word count request or the like.

S304: The master node 10 splits the data processing request to be processed into a map task and a reduce task.

In a specific implementation, the data processing request includes splitting information. The splitting information may include addresses that are of a plurality of slices of to-be-processed data and that are configured by the user. Based on this, the master node 10 may split the data processing request into a plurality of map tasks. A quantity of map tasks is equal to a quantity of slices. Each map task is used to, when executed, process one slice of the to-be-processed data.

The splitting information may further include a partitioning rule. The partitioning rule may be a sequence number-based partitioning rule. For example, intermediate data whose sequence number is an odd number is allocated to one partition, and intermediate data whose sequence number is an even number is allocated to another partition. In another example, intermediate data whose sequence numbers are 1 to K is allocated to a first partition P1, intermediate data whose sequence numbers are K+1 to 2K is allocated to a second partition P2, and by analogy, intermediate data whose sequence numbers are iK+1 to (i+1)K is allocated to an i^{th} partition, where i is a positive integer. The master node 10 may determine a quantity of partitions based on the partitioning rule. For example, when the partitioning rule is parity partitioning based on a sequence number, the quantity of partitions may be 2. The master node 10 may further split the data processing request into a plurality of reduce tasks. A quantity of reduce tasks may be equal to the quantity of partitions. Correspondingly, each reduce task is used to, when executed, process intermediate data of a partition.

For ease of understanding, descriptions are provided below by using a specific example. In an example, the data processing request may be statistics on sales volumes of mobile phones of three brands in an area. The job may be split into four map tasks and three reduce tasks. The four map tasks may be, for example, collecting statistics on sales volumes of mobile phones of all brands in four sub-areas of the area, and the three reduce tasks may be, for example, performing reduction summation on sales volumes of mobile phones of each brand in the four sub-areas.

S306: The master node 10 schedules the map task to a first worker node, and schedules the reduce task to a second worker node.

The first worker node is a worker node 20 configured to execute the map task. The second worker node is a worker node 20 configured to execute the reduce task. When there are M map tasks and N reduce tasks, the master node 10 may randomly select M worker nodes 20 and schedule the M map tasks to the M worker nodes 20, and randomly select N worker nodes 20 and schedule the N reduce tasks to the N worker nodes 20. Each map task may correspond to one worker node 20, and each reduce task may correspond to one worker node 20.

S308: The first worker node executes the map task to obtain intermediate data.

To be specific, when the first worker node executes the map task, the map task may be used to read the input data (that is, to-be-processed data obtained by the first worker node), and perform map processing on the input data one by one. Specifically, a map function is used to process the input data to obtain the intermediate data.

There are usually a plurality of first worker nodes, and map tasks on the plurality of nodes may be concurrently executed. To be specific, the storage system may store an input dataset, and each map task may read a subset of the input dataset. For example, the input dataset includes 1000 pieces of data, the input dataset may include 10 subsets, each subset includes 100 pieces of data, and 10 map tasks may be used to concurrently read 100 pieces of input data in respective subsets.

The map task carries processing logic of the map function. Processing logic of a plurality of map tasks split from one data processing request may be the same. Each map task can process the input data based on the processing logic of the map function, to obtain intermediate data. The intermediate data is temporary data, which is also referred to as shuffle data.

S310: The first worker node applies to the aggregation node 30 for a buffer area in a shared storage area 40.

To be specific, a shared storage area is configured for the aggregation node 30, and the shared storage area can be accessed by a plurality of worker nodes 20. The aggregation node 30 may expose a buffer area obtaining interface to the outside. Each first worker node may invoke the buffer area obtaining interface to apply for a buffer (buffer) area in the shared storage area 40.

In some possible implementations, S310 may be skipped when the data processing method in embodiments of this application is performed. For example, the first worker node may directly write intermediate data into the shared storage area, and the intermediate data written into the shared storage area may be aggregated based on a partition identifier of a partition to which the intermediate data belongs.

S312: The aggregation node 30 returns an application success notification to the first worker node. The aggregation node 30 may determine, in response to an application operation by the first worker node, a memory resource from the shared storage area such as a shared memory as the buffer area. The shared memory may be uniformly addressed. The aggregation node 30 may carry, to the application success notification, an address of the memory resource determined from the shared memory, for example, a start address and an end address, or a start address and a length, and then return the application success notification to the first worker node, so that the first worker node can write the intermediate data based on the address.

In this embodiment, the aggregation node 30 performs unified management on the shared storage area such as the shared memory. In this way, when accessing the shared memory, an upper-layer map task may access memory of a same node (for example, a computing node), to reduce refined management performed by the upper-layer map task on memory of different nodes.

In some possible implementations, S312 may be skipped when the data processing method in embodiments of this application is performed. For example, the first worker node may directly specify, in a request for applying for a buffer area, an address of the applied buffer area. In this way, the aggregation node 30 may allocate a corresponding resource as a buffer resource based on the address, and does not need to return the application success notification to the first worker node.

S314: The first worker node divides the buffer area into a data area and an index area.

The data area is an area used to store intermediate data, and the index area is an area used to store metadata of the intermediate data. When the first worker node executes a map task, the map task may divide the buffer area into a data area and an index area. The index area may provide help for corresponding data in a data read/write area.

When the map task executed by the first worker node divides the buffer area, an index area with a fixed-length may be configured. For example, when the metadata recorded in the index area includes an amount of data of intermediate data in each partition (partition) written into the buffer area, a size of the index area may be set to 4*P bits. Each partition uses 4 bits to record the amount of data, and P is a quantity of partitions. The quantity of partitions may be determined based on the quantity of reduce tasks, for example, may be equal to the quantity of reduce tasks.

When the map task executed by the first worker node divides the buffer area, an index area with a non-fixed length may also be configured. For example, data may be written into the data area and the index area in different directions. Assuming that the start address of the buffer area is 1 and the end address is 1000, the data area may be an area from 1 to x, and the index area is an area from x+1 to 1000, where x is an adjustable integer.

S316: The first worker node writes the intermediate data generated by executing the map task into the data area, and updates the metadata of the index area.

When the first worker node executes the map task, the map task may write the intermediate data into the data area, and update the metadata of the index area based on the written intermediate data. It is to be noted that, this embodiment of this application provides a plurality of write mechanisms. The following separately describes different write mechanisms by using examples.

In a first write mechanism, the buffer area is divided into a data area and an index area. The data area is used to store intermediate data, and the index area is used to store an amount of data that is of each partition of the intermediate data and that is written into the data area. In this implementation, lengths of the data area and the index area may be fixed. Assuming that each partition uses 4 bits for recording and the quantity of partitions is P, the size of the index area is 4*P bits. Assuming that a size of the buffer area is M bits, a size of the data area may be M-4*P bits.

The data area may be divided into a plurality of sub-areas based on different hash values. A division manner of the sub-areas may be configured based on a requirement. For example, the plurality of sub-areas may be divided in an equal division manner. When writing the intermediate data, the first worker node may determine a hash value based on a partition identifier of data in each partition of the intermediate data. For example, the first worker node may substitute the partition identifier into a hash function to obtain a hash value. The first worker node may determine, based on the hash value, a sub-area into which the intermediate data is written, and write the intermediate data into the sub-area. Then, the first worker node may write, to the index area, the amount of data that is of each partition in the intermediate data and that is written into the data area.

In some possible implementations, at least one of the plurality of sub-areas is used to store intermediate data that belongs to two partitions. The intermediate data of the two partitions may share storage space of the sub-area. For example, when the sub-areas are divided equally, the two areas may share storage space whose size is 2 * [(M - 4 * P))/4].

To improve storage space utilization of the sub-area, the intermediate data belonging to the two partitions may be written into the sub-area in a bidirectional write manner. To be specific, the two partitions include a first partition and a second partition. Intermediate data belonging to the first partition may be written into the sub-area in ascending order of addresses of the buffer area, and intermediate data belonging to a second partition may be written into the sub-area in descending order of the addresses of the buffer area.

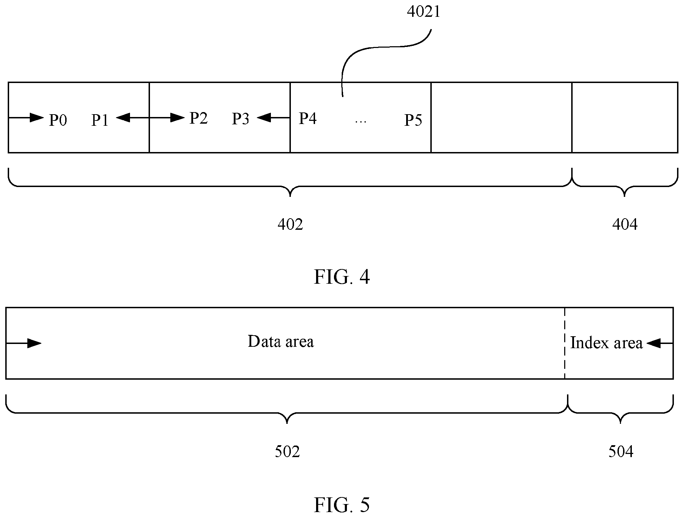

For details, refer to a schematic diagram of a write mechanism shown in FIG. 4. The buffer area includes a data area 402 and an index area 404, where the data area 402 includes a plurality of sub-areas 4021. In this example, there may be 10 partitions. It is assumed that partition identifiers of the 10 partitions are respectively 0 to 9 and are denoted as P0 to P9, a quantity of sub-areas may be 5, and each sub-area may be used to store intermediate data of two partitions. For example, a sub-area 1 may be used to store intermediate data of P0 and P1, a sub-area 2 may be used to store intermediate data of P2 and P3, and by analogy. Details are not described herein again. To improve storage space utilization, the first worker node may write data of the two partitions into the sub-area in a bidirectional write manner. For example, the intermediate data of the partitions such as P0 and P2 may be written into corresponding sub-areas in ascending order of the addresses of the buffer area, and the intermediate data of the partitions such as P1 and P3 may be written into corresponding sub-areas in ascending order of the addresses.

In some embodiments, the first worker node may also perform hashing on each partition identifier. For example, the first worker node divides 0 to 10 by 5, and then performs a remainder to obtain a hash value corresponding to each partition. For example, hash values corresponding to P0 and P5 may be 0, hash values corresponding to P1 and P6 may be 1, hash values corresponding to P2 and P7 may be 2, hash values corresponding to P3 and P8 may be 3, and hash values corresponding to P4 and P9 may be 4. Based on this, the first worker node may write intermediate data of P0 and P5 into the sub-area 1, write intermediate data of P1 and P6 into the sub-area 2, write intermediate data of P2 and P7 into a sub-area 3, write intermediate data of P3 and P8 into a sub-area 4, and write intermediate data of P4 and P9 into a sub-area 5. Intermediate data written into two partitions of a same sub-area may be written in a bidirectional writing manner.

In a second write mechanism, the buffer area is divided into a data area and an index area. The data area is not partitioned. The data area is used to store intermediate data and a length of the intermediate data, for example, each piece of serialized data and a length of each piece of serialized data in the intermediate data. For example, when writing the intermediate data, the map task may additionally perform write in the following format: (length, k, v). The length is a length of serialized intermediate data, and k and v are key-value pair data obtained after the intermediate data is serialized. The index area is used to store a partition identifier of a partition to which each piece of data in the intermediate data belongs and an offset of each piece of data in the data area. For example, the map task may additionally write metadata into the index area in the following format: (partitionId, dataPosition). The partitionId represents a data identifier, and the dataPosition represents an offset of the intermediate data in the data area.

Similarly, to improve storage space utilization, the intermediate data and the metadata may be written in a bidirectional write manner. For example, the intermediate data and the length of the intermediate data may be written into the data area in ascending order of the addresses of the buffer area, and the partition identifier and the offset may be written into the index area in descending order of the addresses of the buffer area. In some embodiments, the intermediate data and the length of the intermediate data may also be written into the data area in descending order of the addresses of the buffer area, and the partition identifier and the offset may be written into the index area in ascending order of the addresses of the buffer area.

For details, refer to a schematic diagram of another write mechanism shown in FIG. 5. The buffer area includes a data area 502 and an index area 504. The data area 502 and the index area 504 share M-bit storage space. Sizes of the data area 502 and the index area 504 are not fixed. The map task additionally writes the intermediate data and the length of the intermediate data in ascending order of the addresses of the buffer area, and additionally writes the partition identifier and the offset in descending order of the addresses of the buffer area.

S318: The first worker node sends an aggregation task to the aggregation node 30 when writing cannot be performed on the buffer area.

When the intermediate data is written by using the first writing mechanism, if remaining storage space of at least one sub-area in the plurality of sub-areas is smaller than first preset storage space, writing cannot be performed on the buffer area. When the intermediate data is written by using the second writing mechanism, and the remaining storage space of the buffer area is smaller than second preset storage space, writing cannot be performed on the buffer area.

The first preset storage space and the second preset storage space may be set based on an empirical value. The first preset storage space is not equal to the second preset storage space. For example, the second preset storage space may be greater than the first preset storage space.

The aggregation node 30 exposes a data aggregation task submission interface to the outside. When writing cannot be performed on the buffer area, for example, when the buffer area is full, the first worker node may submit the aggregation task to the aggregation node 30 based on the data aggregation task submission interface.

S320: The aggregation node 30 executes the aggregation task, to store, in a centralized manner, intermediate data that belongs to a same partition in the shared storage area.

When receiving the aggregation task, the aggregation node 30 may copy intermediate data in the buffer area indicated by the aggregation task to a storage area corresponding to each partition, to store, in a centralized manner, the intermediate data belonging to the same partition. To be specific, the aggregation node 30 may store, in a centralized manner, data that is in the intermediate data and that has a same partition identifier based on the partition identifier, to aggregate the intermediate data.

It is to be noted that, the aggregation node 30 may further store the intermediate data in a centralized and asynchronous manner. For example, the aggregation node 30 may add the aggregation task to a queue. Correspondingly, the intermediate data in the buffer area may be deleted, to support the first worker node in writing new intermediate data. The aggregation node 30 may extract the aggregation task from the queue in a first in first out sequence, and copy the intermediate data indicated by the aggregation task to storage areas corresponding to partitions, to implement centralized storage of the intermediate data belonging to the same partition.

The aggregation node 30 stores the intermediate data in a centralized and asynchronous manner, so that data writing efficiency and resource utilization can be improved. In addition, this method does not require all mechanism to perform concurrency control, thereby further improving data write efficiency and meeting a service requirement.

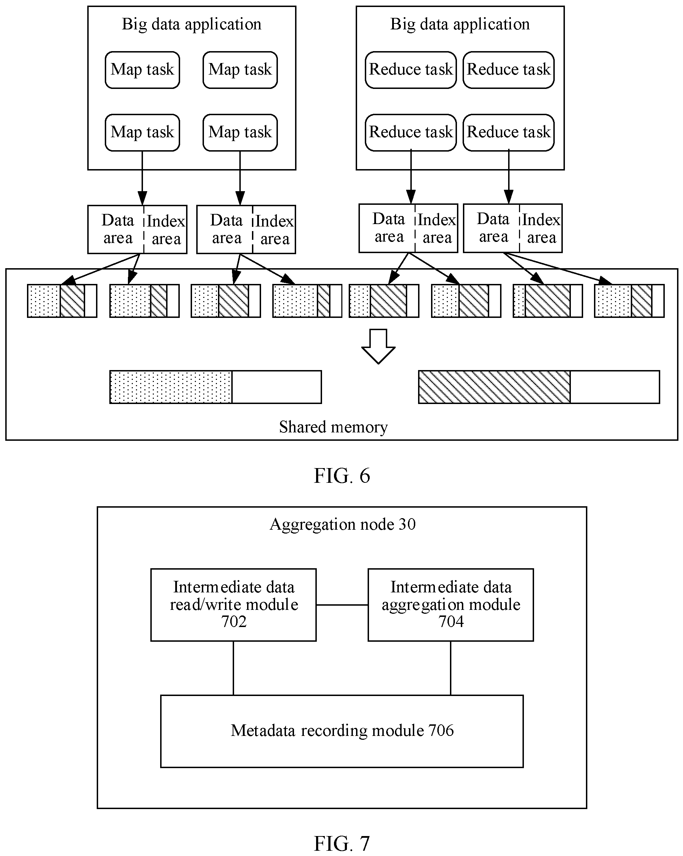

For ease of understanding, an embodiment of this application further provides an example to describe a data aggregation process. Refer to a schematic flowchart of data aggregation shown in FIG. 6. A big data application triggers a data processing request. The data processing request may be split into a map task and a reduce task. The map task may perform map processing on input data to generate intermediate data, and write the intermediate data into a buffer area. The intermediate data may be divided into a plurality of partitions. In this embodiment, it is assumed that the intermediate data is divided into two partitions. The buffer area includes a data area and an index area, where data in two partitions is written into the data area in a bidirectional write manner. In FIG. 6, two different patterns are used to represent intermediate data that belongs to two different partitions, and a blank pattern is used to represent metadata in the index area, for example, an amount of data that is of each partition and that is written into the data area.

When the buffer area is full, the first worker node may submit an aggregation task, and the aggregation node 30 may execute the aggregation task, to store, in a centralized manner, intermediate data that belongs to a same partition in the buffer area.

It is to be noted that, if the map task still has unprocessed intermediate data, the map task may further continue to apply for a buffer area, to write the unprocessed intermediate data, and store, in a centralized manner, the intermediate data that belongs to the same partition in the buffer area. For a specific implementation of applying for a buffer area, writing the unprocessed intermediate data, and storing, in a centralized manner, the intermediate data that belongs to the same partition, refer to the foregoing descriptions of the related content. Details are not described herein again. S322: The second worker node obtains intermediate data of a corresponding partition to execute the reduce task.

To be specific, when the second worker node executes the reduce task, the reduce task may read intermediate data in a corresponding partition, and perform reduce processing, for example, perform processing by using a reduce function, to obtain a processing result. Each reduce task processes intermediate data in a partition to obtain a part of a processing result. The part of the processing result obtained by each reduce task may be used to form a complete processing result. In some possible implementations, the reduce task may start an operation of reading intermediate data in a corresponding partition after intermediate data generated by all map tasks is stored in a centralized manner based on a partition to which the intermediate data belongs. A reduce task on each worker node 20 in the second worker node may concurrently read intermediate data in a corresponding partition.

In some other possible implementations, the reduce task on the second worker node may also read intermediate data in a corresponding partition when the aggregation node 30 stores the intermediate data in a centralized manner based on a partition to which the intermediate data belongs. In this way, a time period for waiting for centralized storage of the intermediate data to be completed can be reduced, and efficiency of obtaining the intermediate data by executing the reduce task can be improved.

In the embodiment shown in FIG. 3, S314 to S316 are implementations of writing the intermediate data into the buffer area by the map task in this embodiment of this application. In another possible implementation of this embodiment of this application, the intermediate data may also be written in another manner. S318 to S320 are implementations of storing, in a centralized manner, intermediate data that belongs to a same partition in the shared storage area in this embodiment of this application, and may also be implemented in another manner in this embodiment of this application. This is not limited in this embodiment of this application.

Based on the foregoing description, an embodiment of this application provides a data processing method. In the method, intermediate data generated during execution of the map task is written into the shared storage area, and intermediate data that belongs to a same partition in the shared storage area is stored in a centralized manner, so that the reduce task can pull intermediate data in a corresponding partition when the intermediate data needs to be used, thereby improving efficiency of pulling data by the reduce task. In addition, intermediate data in each partition is transmitted, so that a quantity of transmission times can be reduced, and a transmission size can be increased. Therefore, network performance can be fully utilized, network congestion and a packet loss caused by an excessive quantity of requests can be avoided, thereby avoiding a fault retry of the reduce task, and ensuring processing performance of a big data application.

The data processing method provided in embodiments of this application is described in detail above, and a distributed system provided in embodiments of this application is described in detail below with reference to the accompanying drawings.

Refer to a schematic diagram of a structure of a distributed system shown in FIG. 2. The system 100 includes a master node 10, a plurality of worker nodes 20, and an aggregation node 30.

The master node 10 is configured to split a to-be-processed data processing request into a map task and a reduce task.

A first worker node in the plurality of worker nodes 20 is configured to execute the map task, and write intermediate data obtained by executing the map task into a shared storage area 40, where the intermediate data is divided into a plurality of partitions based on a quantity of second worker nodes, and each partition belongs to one second worker node.

The aggregation node 30 is configured to store, in a centralized manner, intermediate data that belongs to a same partition in the shared storage area 40.

The second worker node is configured to obtain intermediate data of a corresponding partition to execute the reduce task.

The master node 10 is configured to perform S304 in the embodiment shown in FIG. 3, the first worker node is configured to perform S308 to S316 in the embodiment shown in FIG. 3, the aggregation node 30 is configured to perform S320 in the embodiment shown in FIG. 3, and the second worker node is configured to perform 322 in the embodiment shown in FIG. 3.

The master node 10, the worker nodes 20 (including the first worker node and the second worker node), and the aggregation node 30 may perform the foregoing method steps by executing corresponding functional modules. A key to improving data pulling efficiency in embodiments of this application lies in the aggregation node 30. A structure of the aggregation node 30 is described below with reference to the accompanying drawings.

Refer to a schematic diagram of a structure of an aggregation node 30 shown in FIG. 7. The aggregation node 30 may include the following functional modules.

An intermediate data read/write module 702 is configured to provide a buffer area obtaining interface and a data aggregation task submission interface, where the buffer area obtaining interface is configured to apply for a buffer area and read/write data from/into the buffer area. An intermediate data aggregation module 704 is configured to store, in a centralized manner, intermediate data that belongs to a same partition in the shared storage area 40.

The intermediate data aggregation module 704 may be responsible for processing an aggregation task. To be specific, the intermediate data aggregation module 704 may maintain a queue of aggregation tasks. When receiving an aggregation task, the intermediate data aggregation module 704 may add the aggregation task to the queue, fetch the aggregation task based on a specific sequence, for example, a first in first out sequence, and copy intermediate data in the buffer area included in the aggregation task to a corresponding partition, to store, in a centralized manner, the intermediate data that belongs to the same partition in the shared storage area 40.

Optionally, the aggregation node 30 may further include a metadata recording module 706. The metadata recording module 706 is configured to record metadata of the intermediate data written into the shared storage area 40. The metadata may include a partition identifier, an offset, an amount of data, or the like.

In some possible implementations, the first worker node is specifically configured to:
apply to the aggregation node 30 for a buffer area in the shared storage area 40; and
write the intermediate data into the buffer area.

The first worker node is further configured to:
send an aggregation task to the aggregation node 30 when writing cannot be performed on the buffer area.

The aggregation node 30 is specifically configured to:
execute the aggregation task, to store, in a centralized manner, the intermediate data that belongs to the same partition in the shared storage area.

The first worker node is further configured to perform S310 and S318 in the embodiment shown in FIG. 3, and the aggregation node 30 is configured to perform S320 in the embodiment shown in FIG. 3. For a specific implementation process, refer to the descriptions of related content in the embodiment shown in FIG. 3. Details are not described herein again.

In some possible implementations, data in each partition of the intermediate data has a partition identifier; and the aggregation node 30 is specifically configured to:
store, in a centralized manner, data that is in the intermediate data and that has a same partition identifier based on the partition identifier.

The aggregation node 30 is configured to perform S320 in the embodiment shown in FIG. 3. For a specific implementation process, refer to the descriptions of related content in the embodiment shown in FIG. 3. Details are not described herein again.

In some possible implementations, the buffer area includes a data area and an index area, the data area is used to store the intermediate data, the index area is used to store an amount of data that is of each partition of the intermediate data and that is written into the data area, and the data area is divided into a plurality of sub-areas based on different hash values; and

The first worker node is specifically configured to:
determine a hash value based on a partition identifier of data in each partition of the intermediate data;
determine, based on the hash value, a sub-area into which the intermediate data is written;
write the intermediate data into the sub-area; and
write, into the index area, the amount of data that is of each partition of the intermediate data and that is written into the data area.

The first worker node is configured to perform S314 and S316 in the embodiment shown in FIG. 3. For a specific implementation process, refer to the descriptions of related content in the embodiment shown in FIG. 3. Details are not described herein again.

In some possible implementations, at least one sub-area is used to store intermediate data belonging to two partitions, where intermediate data belonging to a first partition is written into the sub-area in ascending order of addresses of the buffer area, and intermediate data belonging to a second partition is written into the sub-area in descending order of the addresses of the buffer area.

In some possible implementations, the buffer area includes a data area and an index area, the data area is used to store the intermediate data and a length of the intermediate data, and the index area is used to store a partition identifier of a partition to which each piece of data in the intermediate data belongs and an offset of each piece of data in the data area.

In some possible implementations, the intermediate data and the length of the intermediate data are written into the data area in ascending order of addresses of the buffer area, and the partition identifier and the offset are written into the index area in descending order of the addresses of the buffer area; or the intermediate data and the length of the intermediate data are written into the data area in descending order of addresses of the buffer area, and the partition identifier and the offset are written into the index area in ascending order of the addresses of the buffer area.

The distributed system 100 according to this embodiment of this application may correspondingly perform the method described in embodiments of this application, and the foregoing and other operations and/or functions of the components of the distributed system 100 are respectively used to implement corresponding procedures of the methods in the embodiment shown in FIG. 3. For brevity, details are not described herein again.

An embodiment of this application further provides a computer cluster. The computer cluster is configured to implement a function of the distributed system shown in FIG. 2. A hardware architecture of the computer cluster is described below with reference to the accompanying drawings.

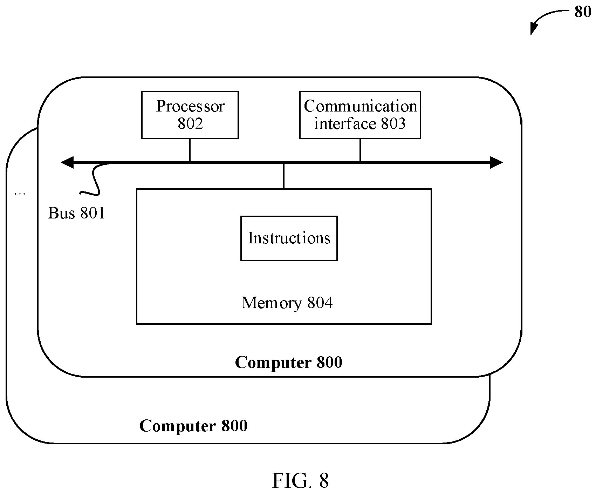

Refer to the schematic diagram of a structure of a computer cluster shown in FIG. 8. The computer cluster 80 includes at least one computer 800. FIG. 8 is described by using an example in which a plurality of computers are included. The computer 800 may be a terminal side device such as a notebook computer or a desktop computer, or may be a device such as a server in a cloud environment or an edge environment.

As shown in FIG. 8, the computer 800 includes a bus 801, a processor 802, a communication interface 803, and a memory 804. The processor 801, the memory 802, and the communication interface 803 communicate with each other by using the bus 804, or may communicate with each other in another manner such as wireless transmission. The memory 802 is configured to store instructions, and the processor 801 is configured to execute the instructions stored in the memory 802 to perform the following operations:
splitting a to-be-processed data processing request into a map task and a reduce task;
executing the map task, and writing intermediate data obtained by executing the map task into a shared storage area, where the intermediate data is divided into a plurality of partitions based on a quantity of second worker nodes, and each partition belongs to one second worker node;
storing, in a centralized manner, intermediate data that belongs to a same partition in the shared storage area; and
obtaining intermediate data of a corresponding partition to execute the reduce task. The foregoing operations may be performed by different processors 801, or may be performed by a same processor 801. This is not limited in this embodiment.

It is to be understood that, in this embodiment of this application, the processor 801 may be a central processing unit (central processing unit, CPU), or the processor 801 may be another general-purpose processor, a digital signal processor (digital signal processor, DSP), an application specific integrated circuit (application specific integrated circuit, ASIC), a field-programmable gate array (field-programmable gate array, FPGA) or another programmable logic device, a discrete gate or transistor logic device, a discrete device component, or the like. The general-purpose processor may be a microprocessor, any conventional processor, or the like.

The memory 802 may include a read-only memory and a random access memory, and provide instructions and data to the processor 801. The memory 802 may further include a non-volatile random access memory. The memory 802 may be a volatile memory or a non-volatile memory, or may include both a volatile memory and a non-volatile memory.

The non-volatile memory may be a read-only memory, a programmable read-only memory, an erasable programmable read-only memory, an electrically erasable programmable read-only memory, or a flash memory. The volatile memory may be a random access memory, and is used as an external cache. As illustrated by way of examples but not limitation, many forms of random access memories (random access memories, RAMs) are available, such as a static random access memory, a dynamic random access memory, a synchronous dynamic random access memory, a double data rate synchronous dynamic random access memory, an enhanced synchronous dynamic random access memory, a synchlink dynamic random access memory, and a direct memory bus random access memory.

The communication interface 803 is configured to communicate with another device connected to the computer 800. In addition to a data bus, the bus 804 may further include a power bus, a control bus, a status signal bus, and the like. However, for clear description, various buses are all marked as the bus 804 in the figure.

It is to be understood that, the computer cluster 80 according to this embodiment of this application may correspond to the distributed system 100 in embodiments of this application, and may correspond to a corresponding body in the method shown in FIG. 3 in embodiments of this application. In addition, the foregoing and other operations and/or functions implemented by the computer cluster 80 are respectively used to implement corresponding procedures of the methods in FIG. 3. For brevity, details are not described herein again.

In addition, an embodiment of this application further provides a computer-readable storage medium. The computer-readable storage medium stores instructions. When the instructions are run on a computer or a computer cluster, the computer or the computer cluster is enabled to perform the method in the foregoing embodiments.

An embodiment of this application further provides a computer program product. When the computer program product is executed by a computer or a computer cluster, the computer or the computer cluster performs any method of the foregoing data processing method. The computer program product may be a software installation package. When any method of the foregoing data processing method needs to be used, the computer program product may be downloaded and executed on a computer.

In addition, it is to be noted that the described system and apparatus embodiments are merely examples. The units described as separate parts may or may not be physically separate, and parts displayed as units may or may not be physical units, may be located in one position, or may be distributed on a plurality of network units. Apart of or all of the modules may be selected according to the actual needs to achieve the objectives of the solutions of the embodiments. In addition, in the accompanying drawings of the system and the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, for this application, software program implementation is a better implementation in more cases. Based on such an understanding, the technical solution of this application essentially or the part contributing to the related art may be implemented in a form of a software product. The computer software product is stored in a readable storage medium, such as a floppy disk, a USB flash drive, a removable hard disk, a read-only memory (read-only memory, ROM), a RAM, a magnetic disk, or an optical disc, and includes several instructions for indicating a computer device (which may be a personal computer, a training device, a network device, or the like) to perform the methods described in embodiments of this application.

All or a part of the foregoing embodiments may be implemented by software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or any other programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, microwave, or the like) manner. The computer-readable storage medium may be any usable medium that can be stored by a computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk solid-state disk (SSD)), or the like.

## Claims

1. A data processing method in a distributed system, wherein the distributed system comprises a management node, a plurality of worker nodes, and an aggregation node, and the method comprises:
splitting, by the management node, a to-be-processed data processing request into a map task and a reduce task;
executing, by a first worker node in the plurality of worker nodes, the map task, and writing intermediate data obtained by executing the map task into a shared storage area, wherein the intermediate data is divided into a plurality of partitions based on a quantity of second worker nodes, and each partition belongs to one second worker node;
storing, by the aggregation node in a centralized manner, intermediate data that belongs to a same partition in the shared storage area; and
obtaining, by the second worker node, intermediate data of a corresponding partition to execute the reduce task.

2. The method according to claim 1, wherein the writing, by the first worker node, intermediate data obtained by executing the map task into a shared storage area comprises:
applying, by the first worker node, to the aggregation node for a buffer area in the shared storage area; and
writing, by the first worker node, the intermediate data into the buffer area;
the method further comprises:
sending, by the first worker node, an aggregation task to the aggregation node when writing cannot be performed on the buffer area; and
the storing, by the aggregation node in a centralized manner, intermediate data that belongs to a same partition in the shared storage area comprises:
executing, by the aggregation node, the aggregation task, to store, in a centralized manner, the intermediate data that belongs to the same partition in the shared storage area.

3. The method according to claim 1 or 2, wherein data in each partition of the intermediate data has a partition identifier; and the storing, by the aggregation node in a centralized manner, intermediate data that belongs to a same partition in the shared storage area comprises:
storing, by the aggregation node in a centralized manner, data that is in the intermediate data and that has a same partition identifier based on the partition identifier.

4. The method according to claim 2, wherein the buffer area comprises a data area and an index area, the data area is used to store the intermediate data, the index area is used to store an amount of data that is of each partition of the intermediate data and that is written into the data area, and the data area is divided into a plurality of sub-areas based on different hash values; and
the writing, by the first worker node, the intermediate data into the buffer area comprises:
determining a hash value based on a partition identifier of data in each partition of the intermediate data;
determining, based on the hash value, a sub-area into which the intermediate data is written;
writing the intermediate data into the sub-area; and
writing, into the index area, the amount of data that is of each partition of the intermediate data and that is written into the data area.

5. The method according to claim 4, wherein at least one sub-area is used to store intermediate data belonging to two partitions, wherein intermediate data belonging to a first partition is written into the sub-area in ascending order of addresses of the buffer area, and intermediate data belonging to a second partition is written into the sub-area in descending order of the addresses of the buffer area.

6. The method according to claim 2, wherein the buffer area comprises a data area and an index area, the data area is used to store the intermediate data and a length of the intermediate data, and the index area is used to store a partition identifier of a partition to which each piece of data in the intermediate data belongs and an offset of each piece of data in the data area.

7. The method according to claim 6, wherein the intermediate data and the length of the intermediate data are written into the data area in ascending order of addresses of the buffer area, and the partition identifier and the offset are written into the index area in descending order of the addresses of the buffer area; or the intermediate data and the length of the intermediate data are written into the data area in descending order of addresses of the buffer area, and the partition identifier and the offset are written into the index area in ascending order of the addresses of the buffer area.

8. A distributed system, wherein the distributed system comprises a management node, a plurality of worker nodes, and an aggregation node;
the management node is configured to split a to-be-processed data processing request into a map task and a reduce task;
a first worker node in the plurality of worker nodes is configured to execute the map task, and write intermediate data obtained by executing the map task into a shared storage area, wherein the intermediate data is divided into a plurality of partitions based on a quantity of second worker nodes, and each partition belongs to one second worker node;
the aggregation node is configured to store, in a centralized manner, intermediate data that belongs to a same partition in the shared storage area; and
the second worker node is configured to obtain intermediate data of a corresponding partition to execute the reduce task.

9. The system according to claim 8, wherein the first worker node is specifically configured to:
apply to the aggregation node for a buffer area in the shared storage area; and
write the intermediate data into the buffer area;
the first worker node is further configured to:
send an aggregation task to the aggregation node when writing cannot be performed on the buffer area; and
the aggregation node is specifically configured to:
execute the aggregation task, to store, in a centralized manner, the intermediate data that belongs to the same partition in the shared storage area.

10. The system according to claim 8 or 9, wherein data in each partition of the intermediate data has a partition identifier; and the aggregation node is specifically configured to:
store, in a centralized manner, data that is in the intermediate data and that has a same partition identifier based on the partition identifier.

11. The system according to claim 9, wherein the buffer area comprises a data area and an index area, the data area is used to store the intermediate data, the index area is used to store an amount of data that is of each partition of the intermediate data and that is written into the data area, and the data area is divided into a plurality of sub-areas based on different hash values; and
the first worker node is specifically configured to:
determine a hash value based on a partition identifier of data in each partition of the intermediate data;
determine, based on the hash value, a sub-area into which the intermediate data is written;
write the intermediate data into the sub-area; and
write, into the index area, the amount of data that is of each partition of the intermediate data and that is written into the data area.

12. The system according to claim 11, wherein at least one sub-area is used to store intermediate data belonging to two partitions, wherein intermediate data belonging to a first partition is written into the sub-area in ascending order of addresses of the buffer area, and intermediate data belonging to a second partition is written into the sub-area in descending order of the addresses of the buffer area.

13. The system according to claim 9, wherein the buffer area comprises a data area and an index area, the data area is used to store the intermediate data and a length of the intermediate data, and the index area is used to store a partition identifier of a partition to which each piece of data in the intermediate data belongs and an offset of each piece of data in the data area.

14. The system according to claim 13, wherein the intermediate data and the length of the intermediate data are written into the data area in ascending order of addresses of the buffer area, and the partition identifier and the offset are written into the index area in descending order of the addresses of the buffer area; or the intermediate data and the length of the intermediate data are written into the data area in descending order of addresses of the buffer area, and the partition identifier and the offset are written into the index area in ascending order of the addresses of the buffer area.
